# EUROPEAN PATENT APPLICATION

(11) **EP 1 785 393 A2**
(43) Date of publication of application: **16.05.2007**
(21) Application number: 06023513.2
(22) Date of filing: 13.11.2006
(51) Int. Cl.: C01B 3/34

(54) **Method for producing hydrogen from a mixture of methane and carbon dioxide**

(30) Priority: 15.11.2005 IT MI20052188
(71) Applicant: Barelli, Linda, 06125 Perugia (IT); Bidini, Gianni, 52100 Arezzo (IT); Desideri, Umberto, 50124 Firenze (IT)
(72) Inventor: Barelli, Linda, 06125 Perugia (IT); Bidini, Gianni, 52100 Arezzo (IT); Desideri, Umberto, 50124 Firenze (IT); Corradetti, Alessandro, 63100 Ascoll Piceno (AP) (IT)
(74) Representative: Marietti, Andrea

(57) **Abstract**

Method for the production of hydrogen from a fuel mixture substantially consisting of methane (CH₄) and carbon dioxide (CO₂) by means of a hydrogen production plant provided with carbonation reactor and calcination reactor, said method comprising the steps of:
a) feeding said carbonation reactor with said fuel mixture;
b) feeding said carbonation reactor with water vapor (gaseous H₂O);
c) feeding said carbonation reactor with calcium monoxide (CaO), said calcium monoxide (CaO) at least partially originating from said calcination reactor;
d) production of hydrogen (H₂) and calcium carbonate (CaCO₃) from said carbonation reactor;
e) feeding said calcination reactor, suitably heated, with said calcium carbonate (CaCO₃);
f) production of calcium monoxide (CaO) and carbon dioxide (CO₂) from said calcination reactor, said calcium monoxide (CaO) and said carbon dioxide (CO₂) evolving by said calcium carbonate (CaCO₃);

characterized in that during said controlled step of feeding said carbonation reactor with calcium monoxide (CaO), the ratio of the calcium monoxide (CaO) moles introduced in the carbonation reactor during step c) to the sum of the methane (CH₄) and carbon dioxide (CO₂) moles contained in said fuel mixture during the above-mentioned step a) is greater than 1.

## Description

The present invention relates to a method and a relative apparatus for the production of hydrogen from a fuel (combustible) mixture substantially consisting of methane (CH₄) and carbon dioxide (CO₂).

Fuel mixtures substantially containing methane, carbon dioxide and, obviously, minor substances found in minimal, sometimes negligible, percentages, such as, for example, carbon monoxide (CO), residual hydrocarbons and other not-mentioned substances, can be advantageously achieved both from an economic and an environmental point of view, through processes for the recovery of renewable energetic substances, such as, for example, biomasses or natural gases or landfill gases or other substances, which are not mentioned herein. Also, said fuel mixtures substantially containing methane and carbon dioxide can also be obtained by known processes of gasification of fuels such as coal or its derivatives, both solid and liquid.

It is further known to use said fuel mixtures for the production of hydrogen employable in fuel cell operation or in other processes in which the hydrogen has a particular practical use. Indeed, hydrogen is a non-polluting fuel, and its use in the field of the electrical power production or in the transport field, or other, not indicated herein, could lead to a dramatic reduction in the polluting emissions in the atmosphere, particularly of the carbon dioxide.

This said, there remains however the fact that the production of hydrogen must be carried out in compliance with environmental standards and in a manner so as to result economically sustainable.

Plants for the production of hydrogen from fuel mixtures are known to use solid or liquid fuels, in any case based on carbon, which, through known processes, are transformed in said gaseous fuels mixtures substantially containing methane and carbon dioxide. Subsequently, said fuel mixtures are decomposed into carbon dioxide and hydrogen through thermo-chemical processes and carbon dioxide absorption/desorption processes; these latter two processes are respectively known with the terms of carbonation and calcination.

As taught in US 6,790,430, said plants for the production of hydrogen consist of two reactors being fluidically connected to each other and are connected in a manner so as to ensure the continuity of the primed chemical reaction for the final production of hydrogen. In particular, to the first of the two reactors, called the carbonation reactor, a fuel mixture is added, in addition to water vapor (H₂O in gaseous form) and calcium monoxide (CaO), which substantially consists of hydrogen and carbon dioxide, while in the second of said two reactors, called the calcination reactor, calcium carbonate (CaCO₃) is introduced, the latter being part of the products resulting from the reactions occurring in the first reactor. In said plant, calcium monoxide acts as a carrier for the carbon dioxide, in fact it traps the carbon dioxide found in the carbonation reactor, thus turning into calcium carbonate, while separates from this within the calcination reactor, thus returning to be potentially aggregable with the carbon dioxide.

Subsequently, the thermo-chemical cycle, which started within the carbonation reactor, ends when said calcium monoxide is further separated from the carbon dioxide at the outlet of the calcination reactor, i.e. before being reintroduced within the carbonation reactor. In more detail, U.S. patent 6,790,430 discloses the three main reactions occurring within the carbonation reactor: the "reforming" reactions of the mixture fuel, the transformation reaction of the carbon monoxide and the carbonation reaction of the calcium monoxide.

The chemical reaction of reforming, commonly known as SMR (Steam Methane Reforming), transforms the fuel mixture introduced within the carbonation reactor in carbon monoxide (CO) and hydrogen (H₂) according to the following formula:

CH₄ + H₂O ←→ CO + 3H₂

Said reforming reaction is endothermic and typically occurs at temperatures in the range between 800 and 950° C.

The second reaction mentioned occurring within the carbonation reactor, id est the transformation reaction of carbon monoxide, is also known with the term CO-shift and is described by the following formula:

CO + H₂O ←→ CO₂ + H₂

Finally, the carbonation reaction of calcium monoxide, i.e. the trapping of the carbon dioxide by calcium monoxide introduced in the carbonation reactor, is described by the formula:

CaO + CO₂ ←→ CaCO₃

The latter two reactions, i.e. the CO-shift and carbonation reactions, are both exothermic and able to counterbalance the heat demand from the reforming reaction which is, as already said, endothermic.

In the whole, the thermo-chemical processes which occur within the carbonation reactor can be summarized by the following chemical reaction:

CH₄ + 2H₂O + CaO ←→ 4H₂ + CaCO₃

At the end of the chemical reactions occurring within the carbonation reactor, hydrogen and calcium carbonate are separated, thus, while the first is sent to feed, for example, a fuel cell or another electrical power production plant or other, not indicated herein, the second, i.e. calcium carbonate, is introduced in the calcination reactor in order to be then re-transformed in calcium monoxide and carbon dioxide. Said reaction is also known with the term of calcination reaction and can be summarized by the following chemical reaction:

CaCO₃ ←→ CaO + CO₂

In this case, the above-mentioned reaction being endothermic, the calcination reactor requires to be provided with heat, so that the reaction can proceed towards calcium monoxide and carbon dioxide; this can be carried out through the supply of a sufficient amount of fuel/comburent (i.e. oxidizer) in said calcination reactor. Said fuel introduced within the calcination reactor can be, for example, the same hydrogen produced by the hydrogen or methane production plant or other fuel not mentioned herein, which, by reacting with a suitable amount of comburent, for example, oxygen (O₂), produces the heat required for the calcination reaction of the calcium carbonate.

Subsequently, at the outlet of the calcination reactor, the calcium monoxide produced is separated by the carbon dioxide and is reintroduced within the carbonation reactor.

Furthermore, in U.S. patent 6,790,430 are disclosed the temperature and pressure ranges of the two reactors within which the reactions described above can be advantageously developed. U.S. patent 6,790,430, while reporting several sets of thermodynamical parameters which can be used in the standard running of the hydrogen production plant, is though silent as regards the specific parameters leading to the optimization of the energetic yield of said hydrogen production plant.

Furthermore, in the U.S. patent 6,790,430 no mention is made of the concentration or concentration range of methane, and accordingly of the carbon dioxide, of the fuel mixture employable in order to achieve economically appreciable results such as, for example, lower or valuable operating income and installation costs from a thermodynamical point of view such as, for example, a higher purity degree for the hydrogen and/or a better energetic yield of the plant.

It is in fact known that a decrease in the concentration of methane in the fuel mixture can greatly affect the running temperature of the two reactors, also yielding huge changes of the energetic yield of the plant. Indeed, in the presence of low methane content fuel mixtures, the carbonation reactor temperature starts to increase, while keeping other conditions constant, since the exothermal carbonation reaction is preferable with respect to the endothermic reforming reaction, leading to an increase in the purity degree of the produced hydrogen, and also to a concurrent decrease of the energetic yield of the same hydrogen production plant. It is understood that this results in a lesser yield for the production of an equal amount of hydrogen starting from a fuel mixture with different methane content.

It is to be noted that herein and below, by "energetic yield" of the plant is meant the ratio of the thermal power which can be originated employing the hydrogen produced by the plant to the sum of the powers absorbed by the plant for its standard running, i.e. the thermal power produced by the fuel mixture introduced into the two reactors and the one absorbed by compressors or recirculating pumps provided in the plant. The latter power, i.e. for the work of the pumps and compressors, is however very often negligible with respect to the two abovementioned thermal powers, and therefore it hardly appears in the assessment of the plant yield.

It is also to be noted that by "purity degree" of the hydrogen produced, expressed in percentage, it is meant the ratio of the amount in mole of the hydrogen actually produced to the sum of the amount in mole of the chemical species found in the hydrogen-rich gas outputted by the carbonation reactor.

It is an object of the present invention to identify suitable running parameters, such as, for example, temperature, pressure of the carbonation/calcination reactors, concentration of the methane contained in the entering fuel mixture and, moreover, the ratio of the molar amounts of the introduced substances, in order to allow the optimization of the energetic yield of a hydrogen production plant of the above-described type.

It is a further object of the present invention to provide said optimized running parameters when the fuel mixture composition consisting substantially of methane (CH₄) and carbon dioxide (CO₂) is changed.

These requirements are met by the present invention, which provides a method for the production of hydrogen from a fuel mixture substantially consisting of methane (CH₄) and carbon dioxide (CO₂) through a hydrogen production plant equipped with a carbonation reactor and a calcination reactor, which comprises the steps of: feeding said carbonation reactor with said fuel mixture, feeding said carbonation reactor with water vapor (gaseous H₂O), feeding said carbonation reactor with calcium monoxide (CaO), said carbon monoxide (CaO) originating from said calcination reactor, production of hydrogen (H₂) and calcium carbonate (CaCO₃) from said carbonation reactor, feeding said calcination reactor with said calcium carbonate (CaCO₃), production of calcium monoxide (CaO) and carbon dioxide (CO₂) from said calcination reactor, in which the ratio of the calcium monoxide (CaO) moles introduced in the carbonation reactor to the sum of the moles of methane (CH₄) and carbon dioxide (CO₂) contained in said fuel mixture introduced in said carbonation reactor is greater than 1.

It has been in fact found that a ratio greater than 1 of the calcium monoxide (CaO) moles introduced in the carbonation reactor to the sum of the methane (CH₄) and carbon dioxide (CO₂) moles contained in said fuel mixture introduced in the carbonation reactor, allows to achieve a higher economic yield, for the same amount of hydrogen produced in similar existing plants, this with no decrease in the purity degree of the hydrogen.

According to a particular aspect of the method of the present invention, the fuel mixture substantially consisting of methane (CH₄) and carbon dioxide (CO₂) introduced within the carbonation reactor can range between 40% and 95% in moles, preferably higher than 65% in moles.

According to a further particular aspect of the method of the present invention, the ratio of the calcium monoxide (CaO) moles introduced in the carbonation reactor to the sum of the methane (CH₄) and carbon dioxide (CO₂) moles contained in said fuel mixture introduced in said carbonation reactor ranges between 1 and 1.50.

Further features and advantages of the present invention will be more clearly understood by the detailed description of a preferred, but not limiting, embodiment of a method for the production of hydrogen and relative plant, illustrated in the annexed Figures, in which:

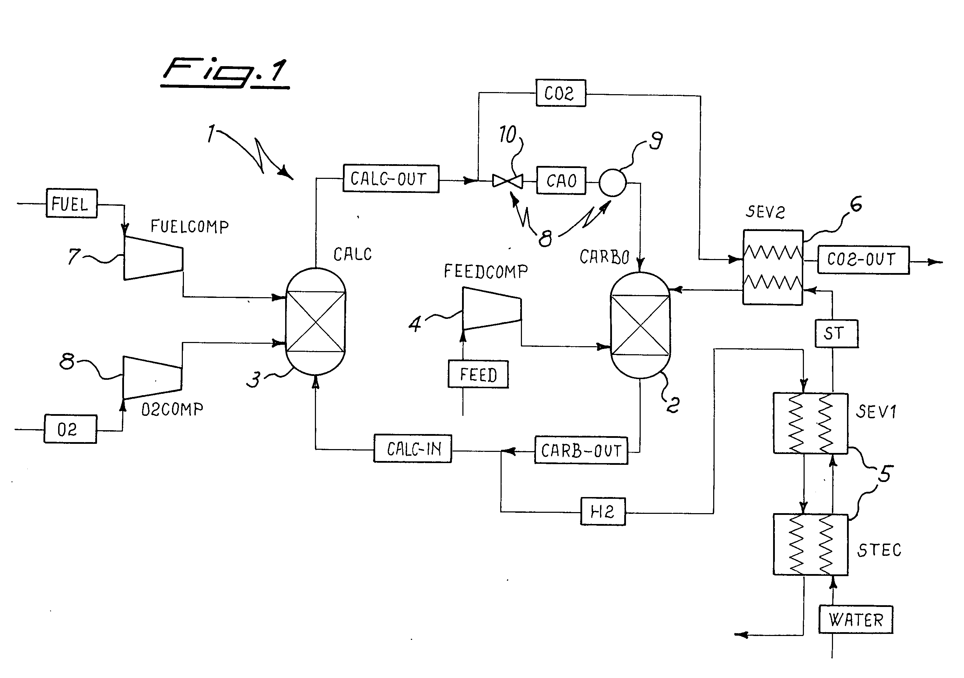

Fig. 1 is a schematic view of a general hydrogen production plant.

With reference in particular to this Figure, the hydrogen production plant is generally indicated with **1**.

Said plant **1,** in a simplified manner, comprises a carbonation reactor **2** and a calcination reactor **3**, which are fluidically connected to each other, in order to ensure a continuous flow of the substances which react within said two reactors.

Within said carbonation reactor **2** water vapor, carbon monoxide is introduced along with a fuel mixture, which substantially consists of methane and carbon dioxide. Furthermore, in said carbonation reactor **2,** according to a known technique, some amount of nickel-based material is provided in order to aid the known and above-described reforming reaction of the fuel mixture introduced therein.

It is to be noted that, although the fuel mixture as mentioned herein substantially consists of methane and carbon dioxide, any other fuel mixture consisting of methane, carbon dioxide and minor substances, in lesser or even negligible percentages with respect to the first two mentioned, such as, for example, carbon monoxide (CO), residual hydrocarbons and other not mentioned, can still implement the technical solution claimed herein.

Said plant **1** for the production of hydrogen can furthermore comprise a first operating machine **4** being able to raise the pressure of said fuel mixture entering said carbonation reactor **2** to a value ranging between 3 and 15 bar.

According to an advantageous aspect of the present invention, said plant **1** for the production of hydrogen is provided with control means **8** for the regulation of the calcium monoxide flow passing from the calcination reactor **3** to the carbonation reactor **2.** These control means **8,** in a particular embodiment thereof, comprise a flow rate meter **9** and an adjusting valve **10** for the flow. Said adjusting valve **10** for the flow can operate automatically on the basis of the measurements taken by said flow rate meter **9;** in fact, after the desired calcium monoxide flow has been externally set, the valve **10** acts upon the flow rate until when the flow rate meter **9** stabilizes on said preset value. The feedback control for the operation of the adjusting valve **10** can be carried out through known control/adjustment devices which use PID control-based, or neural networks, or Fuzzy logic, or any other not cited herein. It is understood that any other means being able to control and adjust the calcium monoxide flow circulating within the plant **1** for the production of hydrogen still implements the technical solution claimed herein.

It is known that the provision of means 8, 9, 10 for regulating the calcium monoxide flow towards the above-mentioned carbonation reactor 2 advantageously allows, according to the present invention, to precisely adjust the amount of the same calcium monoxide provided within the reactor 2 during the carbonation reaction, in particular by imposing a number of moles, the ratio of the latter to the sum of the number of methane and carbon dioxide moles present in the initial fuel mixture being greater than 1.

Furthermore, alternatively to what has been disclosed above, the control of the above-mentioned ratio of the number of the calcium monoxides moles to the sum of the number of methane and carbon dioxide moles provided in the initial fuel mixture can be carried out by keeping the calcium monoxide provided within the plant **1** for the production of hydrogen constant and finely changing the amount of the fuel mixture introduced within the carbonation reactor **2**, without for this falling out of the scope of protection of the present patent.

Further, the ratio of the number of the calcium monoxide moles to the sum of the number of methane and carbon dioxide moles present in the initial fuel mixture can be also changed by adjusting the calcium carbonate flow entering to said calcination reactor **3**. Said control could be done by employing the means **8**, **9**, and **10** located upstream of said calcination reactor **3**. Thereby, by employing the same control/adjustment devices which uses control PID-based or neural networks, or Fuzzy logic, or any other not cited herein, the flow rate of calcium carbonate, and consequently of calcium monoxide exiting from the calcination reactor **3,** would be adjusted according to the user's requirements.

Such a ratio, which can be easily obtained from the analysis of the initial fuel mixture and by a control of the calcium monoxide flow towards the carbonation reactor 2, has proved, as it will more clearly understood herein below, extremely efficient in increasing the energetic yield of the plant described herein.

Furthermore, the plant **1** comprises a first heating means **5** and a second heating means **6** for said water vapor; said first heating means **5** can take advantage of the heat yielded by the hydrogen produced from said hydrogen production plant **1** to heat the water (H₂O in liquid form) entering the plant until it is completely transformed in water vapor (H₂O in gaseous form), said second heating means **6** can take advantage of the heat yielded by the carbon dioxide separated at the outlet of said calcination reactor **3,** as it will be described herein below, in order to further vaporize said water vapor entering said carbonation reactor **2.** In the preferred embodiment shown herein, said first heating means **5** and said second heating means **6** are heat exchangers of the counter-current type, although other types of heat exchangers such as, for example, concurrent, with cross flow or still others, fall within the scope of protection of the present patent.

According to another particular, but not limiting, aspect of the embodiment of the method described herein, in said first heating means **5** the minimum temperature difference between said hydrogen produced from the plant **1** and said water vapor entering the carbonation reactor **2** is of 15 degrees. 15 degrees is also the minimum temperature difference between said water vapor and said carbon dioxide within said second heating means **6.**

It is understood that said minimum temperature differences within the two heating means **5** and **6** can vary with respect to each other, still implementing the technical solution of the method as claimed herein.

Said carbonation reactor **2** can operate at a substantially constant pressure in the range between 3 and 15 bar, such as to facilitate, however, the known and above-described reforming reactions of said fuel mixture, CO-shift of the calcium monoxide and carbonation of carbon dioxide.

Furthermore, said carbonation reactor can exhibit a substantially constant operative temperature falling within a range from 500 to 600° C.

As it is known, the products of the chemical reactions which originate within said carbonation reactor **2** are hydrogen and calcium carbonate. Said hydrogen and said calcium carbonate are subsequently separated, the first is brought outside said plant **1** for the production of hydrogen in order to be advantageously employed in the operation of fuel cells **7** or other plants for the production of electrical power, or other not cited herein, while the second is introduced within said calcination reactor **3** in order to be subsequently fractionated in calcium monoxide and carbon dioxide. In fact, within said calcination reactor the well-known calcination reaction occurs, in which said calcium carbonate is re-fractionated into calcium monoxide and carbon dioxide.

Said calcium monoxide produced within said calcination reactor **3** is subsequently reintroduced within the carbonation reactor **2** in a manner so as to allow the continuous operation of the two reactors of hydrogen production plant **1** and the thermo-chemical processes occurring therein.

Said calcination reactor **2** can operate at a substantially constant pressure in the range between 3 and 15 bar, yet in a manner as to facilitate the calcination reaction occurring therein.

Furthermore, said calcination reactor can have a substantially constant operative temperature falling within a range from 900 to 1000° C.

Said calcination reaction of calcium carbonate introduced within said calcination reactor is endothermic, therefore occurring only in the presence of heat.

The heat for the above-mentioned reaction can be produced by the combustion between a second fuel such as, for example, hydrogen or coal, or methane, or other, and an comburent such as, for example, oxygen. It is t be noted that said second fuel can also be the same fuel mixture introduced within said carbonation reactor **2**, or the same hydrogen produced from said plant, still implementing the technical solution as claimed herein.

The hydrogen production plant **1** can comprise a second operating machine **7** to raise the pressure of said second fuel entering the calcination reactor **3**, and a third operating machine **8** to raise the pressure of said comburent entering the calcination reactor **3**. Said second operating machine and said third operating machine can raise the pressure of said comburent substance and said fuel substance, respectively, in a range between 3 and 15 bar.

As noted by the Applicant, a ratio higher than 1 of the calcium monoxide (CaO) moles introduced in the carbonation reactor to the sum of the methane (CH₄) and carbon dioxide (CO₂) moles contained in the fuel mixture can lead to sensible improvements of the energetic yield and of the purity degree for the hydrogen produced.

In particular, according to a first embodiment of the method of the present invention, in the case where the methane concentration of the fuel mixture introduced in the carbonation reactor **2** is about 95%, the temperature of the carbonation reactor is substantially constant, swinging around 540° C, the one of the calcination reactor is substantially constant, swinging around a 940° C, the running pressure of said calcination reactor **3** and said carbonation reactor **2** is kept substantially constant, around 5 bar, and the ratio of the calcium monoxide (CaO) moles introduced in the carbonation reactor **2** to the sum of the methane (CH₄) and carbon dioxide (CO₂) moles contained in said fuel mixture is substantially 1.33, the hydrogen production plant yield is about 72.6 %, while the purity degree for the hydrogen produced is about 96.1 %.

According to a further embodiment of the method of the present invention, in the case where the methane concentration of the fuel mixture introduced in the carbonation reactor **2** is 75%, the temperature of the carbonation reactor is substantially constant, swinging around 555° C, that of the calcination reactor is substantially constant, swinging around 940° C, the running pressure of said calcination reactor **3** and said carbonation reactor **2** is kept substantially constant, around 5 bar, and the ratio of the calcium monoxide (CaO) moles introduced in the carbonation reactor **2** to the sum of the methane (CH₄) and carbon dioxide (CO₂) moles contained in said fuel mixture is substantially 1.12, the hydrogen production plant yield is about 75.2% and the purity degree for the hydrogen produced is about 98.3 %.

Said results are remarkably valuable, since they allow for the production of hydrogen from hydrogen production plants **1,** known *per se*, but with a higher economic yield and with purity degrees comparable with those achievable by means of said existing hydrogen production plants. This is produced simply by increasing the calcium carbonate flow introduced within the carbonation reactor without substantially changing the temperature and pressure parameters commonly employed.

More generally, the Applicant has noted that in the case where the methane concentration of the fuel mixture introduced in the carbonation reactor **2** has a content ranging between 40 and 95%, the temperature of the carbonation reactor is substantially constant, swinging around 540° C, that of the calcination reactor is substantially constant, swinging around 940° C, the running pressure of said calcination reactor **3** and said carbonation reactor **2** is kept substantially constant, around 5 bar, and the ratio of the calcium monoxide (CaO) moles introduced in the carbonation reactor **2** to the sum of the methane (CH₄) and carbon dioxide (CO₂) moles contained in said fuel mixture ranges between 1 and 1.50, an energetic yield of the hydrogen production plant variable between 70 and 76% and a purity degree for the hydrogen ranging between 95 and 99% is obtained.

It is therefore noted how the present invention achieves the intended aims.

## Claims

1. A method for the production of hydrogen from a fuel mixture substantially consisting of methane (CH₄) and carbon dioxide (CO₂) by means of a hydrogen production plant provided with carbonation reactor and calcination reactor, said method comprising the steps of:
a) feeding said carbonation reactor with said fuel mixture;
b) feeding said carbonation reactor with water vapor (gaseous H₂O);
c) feeding said carbonation reactor with calcium monoxide (CaO), said calcium monoxide (CaO) at least partially originating from said calcination reactor;
d) production of hydrogen (H₂) and calcium carbonate (CaCO₃) from said carbonation reactor;
e) feeding said calcination reactor, suitably heated, with said calcium carbonate (CaCO₃);
f) production of calcium monoxide (CaO) and carbon dioxide (CO₂) from said calcination reactor, said calcium monoxide (CaO) and said carbon dioxide (CO₂) evolving by said calcium carbonate (CaCO₃);
**characterized in that** during said controlled step of feeding said carbonation reactor with calcium monoxide (CaO), the ratio of the calcium monoxide (CaO) moles introduced in the carbonation reactor during step c) to the sum of the methane (CH₄) and carbon dioxide (CO₂) moles contained in said fuel mixture during the above-mentioned sep a) is greater than 1.

2. The method for the production of hydrogen according to claim 1, **characterized in that** said fuel mixture substantially consisting of methane (CH₄) and carbon dioxide (CO₂) has a methane content ranging between 40% and 95% in moles.

3. The method for the production of hydrogen according to claim 1 or 2, **characterized in that** said fuel mixture substantially consisting of methane (CH₄) and carbon dioxide (CO₂) has a methane content of more than 65% in moles.

4. The method for the production of hydrogen according to claim 1 to 3, **characterized in** fact that said ratio of the calcium monoxide (CaO) moles introduced in the carbonation reactor during step c) to the sum of the methane (CH₄) and carbon dioxide (CO₂) moles contained in said fuel mixture during the above-mentioned step a) ranges between 1 and 1.50.

5. The method for the production of hydrogen according to claim 4, **characterized in that** said ratio of the calcium monoxide (CaO) moles introduced in the carbonation reactor during step c) to the sum of the methane (CH₄) and carbon dioxide (CO₂) moles contained in said fuel mixture during the above-mentioned step a) is 1.33.

6. The method for the production of hydrogen according to claim 1 to 5, **characterized in that** said carbonation reactor and said calcination reactor are kept at a constant pressure ranging between 3 bar and 15 bar.

7. The method for the production of hydrogen according to claim 6, **characterized in that** said carbonation reactor and said calcination reactor are kept at a constant pressure of 5 bar.

8. The method for the production of hydrogen according to claim 1 to 7, **characterized in that** the calcium monoxide (CaO) and carbon dioxide (CO₂) production step from said calcination reactor occurs at a constant temperature ranging between 900 and 1000°C.

9. The method for the production of hydrogen according to claim 1 to 8, **characterized in that** the step of producing hydrogen (H₂) and calcium carbonate (CaCO₃) from said carbonation reactor occurs at a constant temperature ranging between 500 and 600° C.

10. The method for the production of hydrogen according to claim 8 and 9, **characterized in that** said carbonation reactor and said calcination reactor are kept at a substantially constant temperature respectively of 540° C and 940° C.

11. The method for the production of hydrogen according to claim 1 to 10, **characterized in that** the step of feeding said carbonation reactor with said fuel mixture is preceded by the step of compressing said fuel mixture.

12. The method for the production of hydrogen according to claim 1 to 11, **characterized in that** the step of feeding said calcination reactor comprises the step of heating said calcination reactor.

13. The method for the production of hydrogen according to claim 12, **characterized in that** the step of heating said calcination reactor is preceded by the step of compressing and feeding oxygen (O₂) in said calcination reactor.

14. The method for the production of hydrogen according to claim 1 to 13, **characterized in that** the step of feeding said carbonation reactor with water vapor (gaseous H₂O) is preceded by the step of compressing, heating the water (H₂O in liquid form) and subsequently heating said water vapor (gaseous H₂O).

15. A hydrogen production plant provided with at least one calcination reactor for the introduction of water vapor, calcium monoxide and a fuel mixture substantially consisting of methane and carbon dioxide, at least one calcination reactor for the introduction of calcium carbonate at least partially produced from said carbonation reactor, said carbonation reactor and said calcination reactor being fluidically connected to each other, **characterized in that** it comprises means to control the calcium monoxide flow rate towards said carbonation reactor and/or to control said fuel mixture flow rate.

16. The hydrogen production plant according to claim 15, **characterized in that** said means to control the calcium monoxide flow rate are interposed between said calcination reactor and said carbonation reactor.

17. The hydrogen production plant according to claim 15 or 16, **characterized in that** said means to control the calcium monoxide flow comprise at least one control valve and at least one flow rate meter for said flow.

18. The hydrogen production plant according to claim 15, **characterized in that** it comprises further means to control the calcium carbonate flow rate towards said calcination reactor.

19. The hydrogen production plant according to any claim 15 to 18, comprising heating means for said water vapor, said heating means employing, at least partially, the heat yielded by the products exiting from said carbonation reactor.
